# EUROPEAN PATENT APPLICATION

(11) **EP 2 669 734 A1**
(43) Date of publication of application: **04.12.2013**
(21) Application number: 12170305.2
(22) Date of filing: 31.05.2012
(51) Int. Cl.: G02F 1/13357, G01D 7/00, G01D 11/28, G01R 13/40, G09F 9/33, H04H 60/04, G02B 6/00

(54) **Display system for displaying a signal parameter and related text**

(71) Applicant: Harman International Industries Ltd., Potters Bar, Hertfordshire EN6 3JN (GB)
(72) Inventor: Rowe, Matthew, Welwyn Garden City, Hertfordshire AL7 4RZ (GB); Clark, George, Stevenage, Hertfordshire SG2 7BH (GB); Chisholm, Alistair, London, W14 9HT (GB)
(74) Representative: Bertsch, Florian Oliver

(57) **Abstract**

The invention relates to a display system receiving an input signal (10) and configured to display at least one signal parameter of the input signal and configured to display a text relating to the input signal, the system comprises an LCD display screen (200) configured to indicate the signal parameter and to display the text of the input signal, the LCD display screen (200) comprising a first area (210) where the signal parameter is indicated and a second area (220) where the text is displayed. The display system comprises a plurality of LEDs (300) configured to provide a back illumination for the LCD display screen, the plurality of LEDs comprising a first group of LEDs (310) provided to illuminate the first area (210), and a second group of LEDs (320) provided to illuminate the second area (220). The display system furthermore comprises a guidance structure (400) configured to guide light emitted from the LEDs (300) to LCD display screen (200), the guidance structure (400) being designed to limit an emission of light emitted from the first group of LEDs (310) to the first area (210) and to limit the emission of light emitted from the second group of LEDs (320) to the second area (220). The display system also comprises a backlight control module (500) configured to control the on/off status of the plurality of LEDs (300), wherein the backlight control module (500) is configured to indicate the signal parameter in the first area by controlling the on/off status of the first group of LEDs (310) in accordance with the received input signal and is configured to control the LEDs (320) of the second group in such a way that a backlight illumination is provided by the LEDs of the second group allowing the text present in the second area of the LCD display screen to be displayed.

## Description

### Technical Field

The present invention relates to a display system and to an audio mixing console.

### Background

In an audio mixing console several audio input channels are mixed in order to generate audio output signals. Especially for the purposes of mixing multiple channels of live audio on a digital live mixing console, it is beneficial to have recallable text information displayed on each channel such as channel name or instrument while as at the same time to be able to visually monitor live audio levels for each channel. The use of LEDs (Light Emitting Diodes) for signal level metering is known and performs well for the purpose of rapidly displaying signal level. However, this cannot currently manage the display of text information relating to the audio input signal.

Furthermore, FSTN (Film compensated Super-Twisted Nematic display) LCD displays are known in which a passive matrix LCD technology is used which uses a film compensating layer between the STN (Super-Twisted Nematic display) and the rear polarizer for added sharpness and contrast.

Cost sensitive FSTN LCDs are not used for monitoring rapidly changing signals due to their response time being too slow for monitoring. Furthermore, TFT (Thin Film Transistor) LCDs are known, however, these TFT LCDs are normally too expensive for the simple display of a signal parameter.

The problem of displaying a rapidly changing parameter of an input signal and of displaying text information relating to the input signal and describing the input signal in more detail also exists in fields other than audio mixing consoles, e.g. in each field where a detected input, which is normally a digital input signal, should be monitored and where the displaying of text describing the digital input signal is needed.

In many applications the space provided to display the signal parameter and the related text is often limited. Accordingly, a need exists to provide a display system allowing a signal parameter of a fast-changing input signal to be correctly displayed and allowing at the same time a text relating to the input signal or to the signal parameter to be displayed in a limited space.

### Summary

This need is met by the features of the independent claim. Further embodiments are described in the dependent claims.

According to one aspect of the invention a display system is provided receiving an input signal and which is configured to display at least one signal parameter of the input signal and which is configured to display a text relating to the input signal. The system comprises an LCD display screen configured to indicate the signal parameter and to display the text of the input signal. The LCD display screen comprises a first area where the signal parameter is indicated and a second area where the text is indicated. The display system furthermore contains a plurality of LEDs configured to provide a back illumination for the LCD display screen. The plurality of LEDs provide a first group of LEDs provided to illuminate the first area, furthermore a second group of LEDs is provided to illuminate the second area. The display system furthermore comprises a guidance structure configured to guide light emitted from the LEDs to the LCD display screen. The guidance structure is designed to limit an emission of light emitted from the first group of LEDs to the first area and to limit the emission of the light emitted from the second group of LEDs to the second area. Furthermore, a backlight control module is provided configured to control the On/Off status of the plurality of LEDs wherein the backlight control module is configured to indicate the signal parameter of the input signal in the first area by controlling the On/Off status of the first group of LEDs in accordance with the received input signal. The backlight control module is furthermore configured to control the LEDs of the second group in such a way that a backlight illumination is provided by the LEDs of the second group allowing the text present in the second area of the LCD display screen to be displayed.

The invention provides a display system which combines an LCD display with an LED back illumination. The text which is normally a static or slow-changing information is shown in the second area with the LEDs of the second group providing the background illumination. The displaying of the more rapidly changing input signal, especially the displaying of the signal parameter, is possible by controlling the On/Off status of the LEDs of the first group in accordance with the changing signal parameter in such a way that the on or off status of the LEDs of the first group is visible in the first area of the display screen. The guidance structure helps to limit the light of the LEDs of the first group and to limit the light of the LEDs of the second group to the second area so that both areas can be provided on a limited space.

The LCD display may be an STN LCD display. With the use of the STN display screen a very cost effective way is obtained to display at the same time a fast-changing signal and a related text. The STN display can be an FSTN display, an FFSTN display, a DSTN display or any other LCD display. A very cost effective solution is obtained when an FSTN LCD display is used.

The invention furthermore relates to an audio mixing console comprising a display system as mentioned above with the input signal being an audio input signal. However, the display system may also be used in any other monitoring unit where it is necessary to display at the same time a fast-varying signal parameter and a text relating to the signal parameter or to the input signal.

### Brief description of the Drawings

The novel features believed characteristic of the invention are set forth in the appended claims. The invention itself, however, as well as a preferred mode of use, further objectives and advantages thereof, will be best understood by reference to the following detailed description of an illustrative embodiment when read in conjunction with the accompanying drawings, wherein
Fig. 1 is a schematic exploded view of some of the components of the display system allowing a fast-changing signal parameter and text to be displayed at the same time,
Fig. 2 is a schematic block diagram of the display system shown in Fig. 1,
Fig. 3 shows the display system of Fig. 1 in an assembled state,
Fig. 4 shows a schematic view of a display screen of the display system, and
Fig. 5 is a schematic top view of the LEDs used to illuminate the first and second area of the display screen.

### Detailed description

In the following description, the numerous specific details are set forth to provide a thorough understanding of embodiments of the invention. One skilled in the relevant art will recognise, however, that the invention can be practised without one or more of the specific details, or with other components, materials etc. Furthermore, reference throughout the specification to one embodiment or an embodiment means that a particular feature, structure, or characteristic described in connection with the embodiment is included in at least one embodiment of the invention. Thus, the appearances of the phrases in one embodiment throughout the specification do not necessarily all refer to the same embodiment. Furthermore, the particular features, structures, or characteristics may be combined in any suitable manner.

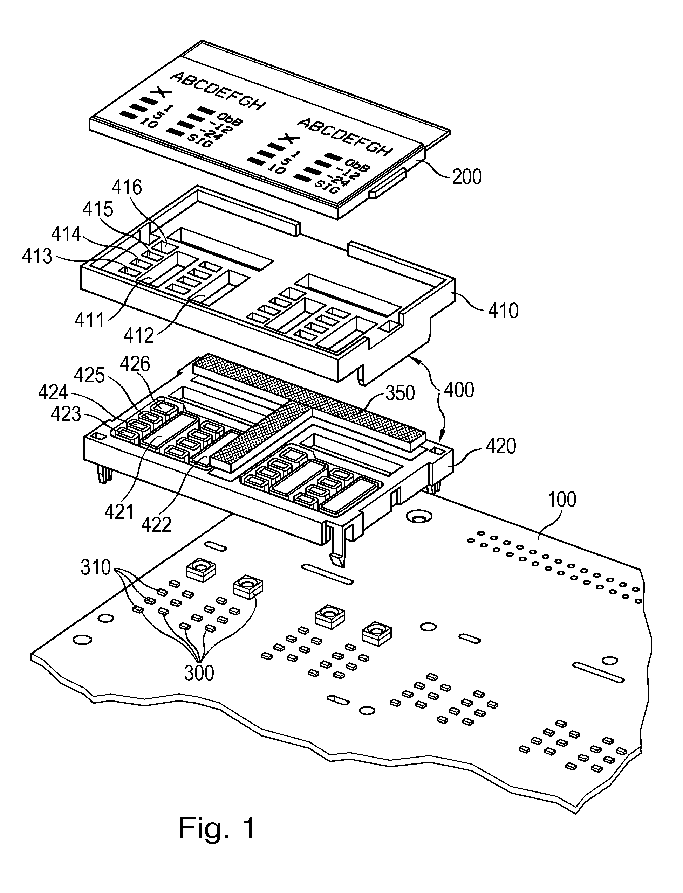

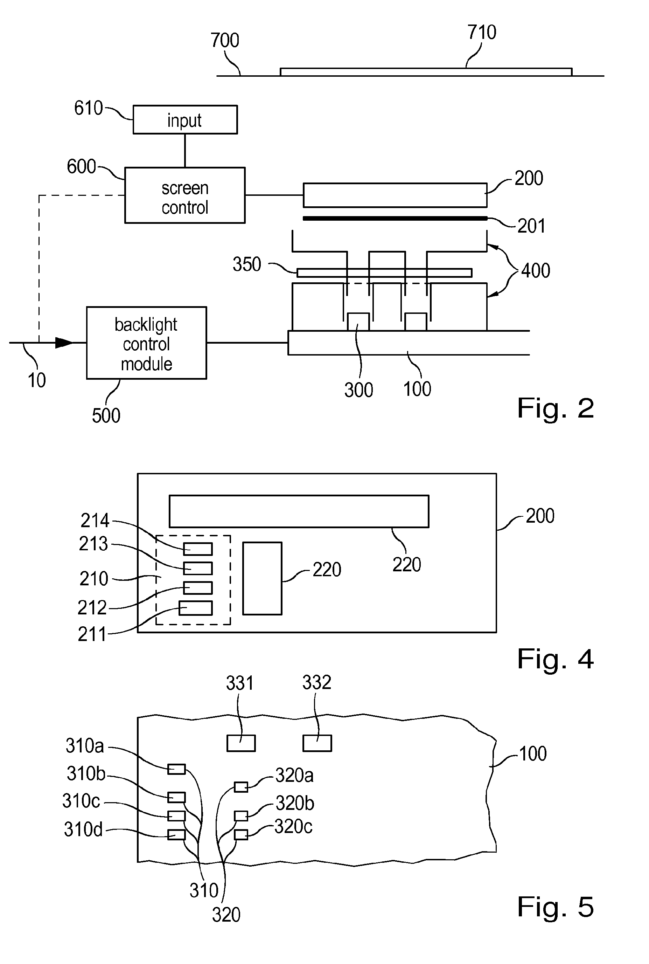

With reference now to the Figs. and in particular with reference to Figs. 1 and 2, a display system is shown that can be incorporated into an audio mixing console and which allows displaying of text and of a signal parameter at the same time in a very constrained space. The display system comprises a printed circuit board 100, an FSTN display screen 200, LEDs 300, and a guidance structure 400 which creates a shroud containing separate hollow channels which pipe the light of the LEDs 300 to corresponding regions or areas on the display screen 200. A backlight control module 500 is provided which controls the LEDs provided on the circuit board 100, the LEDs providing the backlight illumination for the LCD display screen 200. A screen control module 600 is provided via which a user can input text using input module 610 and which controls the information indicated on the LCD screen 200.

In Fig. 2 a screen surface 700 of the audio mixing console is shown in which the display system is incorporated. The surface 700 is the control surface seen by the user. On the control surface a lens 710 is provided, e.g. a plastic lens, which sits on the surface 700 and refracts the image of the display screen 200 onto the outer lens face, the upper face of the lens 710 which is the control surface used by the user to control the functioning of the mixing console. It should be understood that the audio mixing console may have other operating devices in the form of key or soft switches. However, they have been omitted for the sake of clarity.

A digital audio input signal 10 received by the mixing console is inter alia fed to the backlight control module. The audio input signal can be a digital signal and may originally be an analogue input signal such as a microphone input which has passed an A/D converter or a digital signal originating from a music instrument such as a keyboard. A signal parameter, such as a signal level or a gain reduction or any other dynamic signal parameter, should be indicated on the display screen. To this end the LEDs 300 provided on the printed circuit board 100 contain a first group of LEDs 310 which provides the backlight for a first area of the display screen where the rapidly changing signal parameter should be indicated. A diffuser 201 is located below the LCD screen 200 to provide a more homogeneous back illumination for the screen 200.

The separation of the LEDs on the printed circuit board 100 in a first group of LEDs 310 and a second group of LEDs 320 is explained in more detail in connection with Figs. 4 and 5.

Fig. 4 shows a top view of a part of the screen 200 which can display a screen similar to the one shown in Fig. 1 or 2 or a completely different screen with a different arrangement of the LEDs of the first and of the second group. The screen comprises a first area 210 shown by the dashed line where the signal parameter itself can be displayed. The screen furthermore contains at least one second area 220 where the text related to the signal parameter or a text related to the input signal is shown. In the example shown in Fig. 4 two second areas are shown, a vertical and a horizontal second area 220. As can be also seen from Fig. 1 the horizontal text field may indicate the name of the input signal or of the signal parameter to be displayed. In the embodiment shown in Fig. 1 this is symbolized by the characters A-H. In the second vertical text field the signal parameter may be indicated. By way of example the second text field may contain a labelling of the signal parameter. In the embodiment shown in Fig. 1 this labelling is symbolized by the signal level, here the signal level of the audio signal with 0 dB, -12 dB, -24 dB etc. In the other text field shown in the left part of Fig. 1 the symbols 1, 5, and 10 symbolize a compression level or gain reduction level of the audio signal. The user may select the text to be displayed using input unit 610, the screen control module 600 generating the text on the display screen 200 by controlling the pixels of the LCD screen in such a way that a defined text can be indicated in the second area using the back illumination of the LCDs of the second group. Furthermore, it is possible that the text such as the signal level may be automatically generated based on the received input signal. To this end, as shown in Fig. 2, the input signal may also be fed to the screen control module 600 as shown by the dashed line where the input signal is also fed to the screen control module 600. It should be understood that any other text may be indicated in the second area 220. Furthermore, the arrangement of the second area 220 relative to the first area may be different than shown in Figs. 1 and 4.

As can be seen in Figs. 1 and 5 a first group of LEDs 310 is provided which provides a back illumination for the first area where the signal parameter is actually displayed. Furthermore, a second group of LEDs 320 is provided which provides the back illumination for the text field 220. The first group of LEDs also provides a back illumination of the first area 210, but the first area of the displayed information mainly depends on the On/Off status of the first group of LEDs and not on an information indicated on the screen.

As can be seen inter alia from Fig. 1 the guiding structure 400 containing a first part 410 and a second part 420 is designed in such a way that hollow channels are generated which pipe the light of the LEDs to the correct regions of the display screen to line up with the pixels of the display screen 200 defining their display purpose. As can be especially deduced from Fig. 1 the first part of the guiding structure, the upper part 410, comprises a recessed area 411 which together with the four side walls of the elevated area 421 generates a channel through which the light from the corresponding LEDs 320 is transmitted to the second area 220 of the display screen. The recessed area 411 and the elevated area 421 interact in such a way that a closed channel is generated which limits the light emitted by the two LEDs 320a, 320b, and 320c to a text field provided in the second area of the screen 200.

In the embodiment shown in Fig. 1 the text field illuminated by the LEDs 320a, 320b, and 320c is the text field indicating the figures 1, 5, and 10 dB. A similar recessed area 412 and a corresponding elevated area 422 are provided to generate the hollow channel for the other text field not shown in Fig. 4 but shown in Fig. 1 where another parameter of the input signal may be displayed. In the example shown the text field contains the signal level with the indication of 0 dB -12 -24, the abbreviation SIG meaning that here the signal level is indicated. In the embodiment shown three LEDs 320a, 320b and 320c are provided to illuminate the hollow channel for the text field 220. However, it should be understood that it is possible to use only a lower number of LEDs to illuminate this text, e.g. one or two LEDs. Furthermore, depending on the size of the text field more than three LEDs may be used.

The text indicated in the text field of the second areas normally does not change at higher frequencies. Normally, once it has been decided which signal parameter is indicated in the corresponding first area, the information indicated in the text field remains unchanged. However, it should be understood that the text field can be changed when another parameter of the input signal is indicated or when another text is input by the user of the system using screen control module 600. In the example shown in Fig. 5 the three LEDs 320a to 320c all have the same colour.

The upper horizontal text field of the second area shown in Fig. 4 is illuminated by two LEDs 331 and 332. These LEDs may be multicolour LEDs configured to emit lights of different colours. Thus, it might be possible to define the colour that is used to illuminate the horizontal text field shown in Fig. 4 where any text describing the displayed signal in more detail may be indicated, by using LEDs of the desired colour.

The signal parameter itself is indicated using the LEDs of the first group. As can be seen from Fig. 1 the two-part guidance structure comprises recessed areas 413-416 and corresponding elevated areas 423-426 which provide different hollow channels for symbolizing the monitored signal parameter on the screen 200. For each hollow signal channel a single LED of the first group is provided, the LEDs 310a-310d shown in Fig. 5. As it was explained in connection with the text field of the second area the colours of the LED determine the colour of the pixels shown on the screen 200. The screen 200 can be a monochrome LCD screen, especially an FSTN LCD display screen or any other STN screen.

The On/Off status of the LEDs 310a-310d is now used to indicate the signal parameter itself. The signal parameter may be a rapidly changing parameter which may change in the frequency range between 1-100 Hz, e.g. in the range between 10-30 Hz, e.g. 20 Hz. This rapid change of the signal parameter cannot be monitored using the LCD screen alone as the response time of the LCD screen may be too slow for monitoring the signal parameter. In the present invention it is nevertheless possible to display the varying signal parameters by controlling the On/Off status of the first group of LEDs in accordance with the frequency of the changed signal parameter. In the example shown the signal is a digital signal and the four LEDs 310a-310d symbolize the bar graph of the displayed signal parameter. In the embodiment shown only three of the four LEDs are actually used to indicate a varying signal parameter which could have four different values if all four LEDs are used to indicate the signal parameter. By way of example, when the LEDs 310a-310d illuminate the hollow channels next to the text of 0dB to -24dB, the On/Off status of the different LEDs is then controlled in such a way that the On/ Off status represents the signal level. By way of example, when only the two lower LEDs 310d and 310c are turned on, two bars of the signal level may be indicated, whereas when all LEDs 310a to 310d emit light, four different bars are symbolized on the screen 200. In this example all four LEDs are used to indicate the signal level. In the example shown in Fig. 1, only three of the LEDs might be used to indicate the signal parameter, on the left column shown in Fig. 1 the uppermost LED illuminates the pixels in the first area in such a way that an X is shown, and this character X can indicate whether a certain signal processing of the input signal is carried out or not.

In the first area of the LCD screen where the signal parameter is indicated a certain pattern of pixels is set to a transparent state so that as soon as the LED located on the other side of the hollow channel emits light, the emitted light is visible on the screen. In the example shown in Fig. 1 the corresponding regions on the display screen are rectangular regions symbolizing a bar of the bar graph. However, it should be understood that other patterns such as the X shown in the upper left side of Fig. 1 in the first area may be used. However, the information indicated in the corresponding first area is not changed, only the On/Off status of the LEDs is changed to indicate the varying signal parameter.

Referring back to Fig. 4 this means that the first area 210 where the signal parameter is indicated is subdivided into several areas or subregions 211 to 214, each sub-region symbolizing the signal change of the signal parameter. In the example shown one LED illuminates one hollow channel and the illumination of a channel is controlled by simply controlling the On/Off status of the corresponding LED. As explained above in connection with the text field, the colour of the light emitted by the LED defines the colour shown on the display screen 200. In the subregions the pixels which are set to a transparent state are also named the active pixels, whereas other pixels in the first area outside the subregions may be set to an opaque state, i.e. the passive pixels. Furthermore, all pixels in the first area may be active pixels, or only the pixels located in the subregions such as subregions 211-214 may be active pixels.

Summarizing, in more general terms the first area of the LCD display screen is further divided into several sub-regions, such as the sub-regions 211 to 214. The guidance structure provides separated hollow channels for these sub-regions wherein one hollow channel is provided for each sub-region. The backlight control module may then control the On/Off status of the LED for each sub-region in dependence on the signal parameter of the received input signal. In the embodiment shown, a single LED of the first group is provided for each sub-region. However, it should be understood that it is possible to use two LEDs for each sub-region when they are turned on or off simultaneously. In the sub-regions of the first area on the LCD screen the state of the pixels normally does not change, the pixels are adjusted to a transparent state so that the light emitted by the corresponding LED is visible to the user. With such an embodiment it becomes possible to monitor a signal parameter which changes at a frequency that is higher than the frequency with which it is possible to change the information shown on a pixel. Thus, the state of the pixel displayed in the first area of the LCD screen is kept constant as long as the same signal parameter is monitored.

In more general terms, the screen control module generates the text present in the second area of the LCD display screen and the screen control module is configured to indicate text in a second area of the LCD display screen. As long as the monitoring of the signal parameter is going on in the first area, the screen control module does not change the screen. In the first area, especially in the sub-regions such as the sub-regions 211 to 214 the information displayed only depends on the On/Off status of the corresponding LEDs.

As can be also deduced from the above, the second area comprises at least one text field, such as the text field 220 shown in Fig. 4, where the text is displayed. The guidance structure then provides one hollow channel for each of the at least one text field.

Furthermore, it is possible that a diffuser is provided between the LEDs and the LCD display screen. This diffuser may be present in the first area and/or in the second area of the display screen and provides a more homogeneous back illumination for the different areas of the screen.

As can be seen from the above, the colour of an LED determines the colour shown in the first or second area when the LCD screen is a monochrome screen.

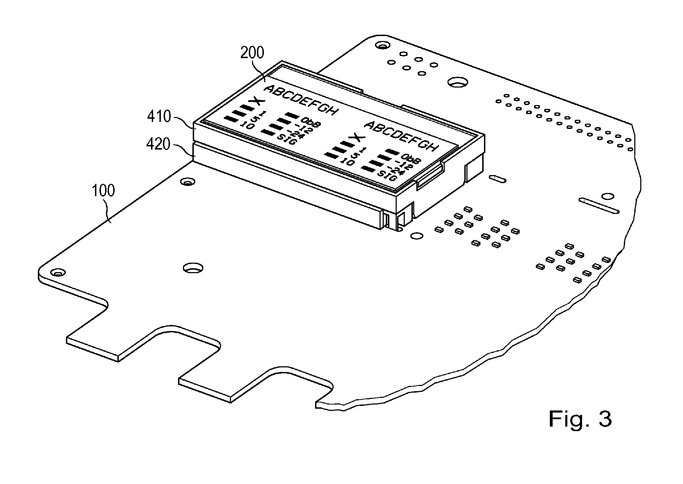

In Fig. 3 the main components of the display system are shown in an assembled state. The two parts of the guidance structure 400 are provided superimposed, with the whole guidance structure 400 being connected to the printed circuit board 100. The guidance structure 400 is connected to the printed circuit board in such a way that the LEDs are in alignment with the corresponding hollow channels. To orient the screen 200 with minimal visual parallax error, whilst absorbing mechanical tolerances and ensuring light does not blend from one area to the other area, the guidance structure can be made of injection moulded parts, e.g. ABS injection moulded parts, ABS standing for Acrylonitrile-Butadiene-Styrene, which are separated by a compressible layer 350 shown in Fig. 1 and 2. By way of example, the compressible layer can be a compressible foam layer which absorbs mechanical tolerances so that it can be assured that light is kept within the hollow channels.

With the hollow channels the light of individual colours from the LEDs can be piped to the LCD screen and it is possible to mask out unwanted regions and colours of backlight.

As can be deduced from Fig. 3 the monitoring of a signal parameter and the displaying of text is possible in a very constrained space using the above-described invention. Furthermore, a cost effective solution is obtained when a fast-changing signal parameter should be indicated with some text describing the signal or the signal parameter in further detail. In the first area of the LCD screen the On/Off status of the LEDs is used to indicate the signal parameter. This On/Off status of the LEDs can be changed at high frequencies. The text shown on the LCD display can be displayed using other LEDs, the LEDs in a second area of the screen to provide a back illumination that is used to more steadily display the text relating to the displayed signal parameter. Thus, it becomes possible to display general text information of an input signal and a rapidly changing signal parameter using the same LCD display.

## Claims

1. A display system receiving an input signal (10) and configured to display at least one signal parameter of the input signal and configured to display a text relating to the input signal, the system comprising:
- an LCD display screen (200) configured to indicate the signal parameter and to display the text of the input signal, the LCD display screen (200) comprising a first area (210) where the signal parameter is indicated and a second area (220) where the text is displayed,
- a plurality of LEDs (300) configured to provide a back illumination for the LCD display screen, the plurality of LEDs comprising a first group of LEDs (310) provided to illuminate the first area (210), and a second group of LEDs (320) provided to illuminate the second area (220),
- a guidance structure (400) configured to guide light emitted from the LEDs (300) to LCD display screen (200), the guidance structure (400) being designed to limit an emission of light emitted from the first group of LEDs (310) to the first area (210) and to limit the emission of light emitted from the second group of LEDs (320) to the second area (220),
- a backlight control module (500) configured to control the on/off status of the plurality of LEDs (300), wherein the backlight control module (500) is configured to indicate the signal parameter in the first area by controlling the on/off status of the first group of LEDs (310) in accordance with the received input signal and is configured to control the LEDs (320) of the second group in such a way that a backlight illumination is provided by the LEDs of the second group allowing the text present in the second area of the LCD display screen to be displayed.

2. The display system according to claim 1, wherein the first area (210) of the LCD display screen is further divided into several sub-regions (211-214), wherein the guidance structure (400) provides separated hollow channels for the sub-regions (211-214), wherein one hollow channel is provided for each sub-region, wherein the backlight control module (500) controls the on/off status of the LED for each sub-region (211-214) in dependence on the signal parameter of the received input signal.

3. The display system according to claim 2 wherein a single LED of the first group of LEDs (310) is provided for each sub-region.

4. The display system according to any one of the preceding claims, further comprising a screen control module (600) configured to generate the text present in the second area (220) of the LCD display screen (200) and configured to indicate the text in the second area (220) of the LCD display screen.

5. The display system according to any one of the preceding claims, wherein the second area (220) comprises at least one text field where the text is displayed, the guidance structure providing a hollow channel for each said at least one text field.

6. The display system according to any one of the preceding claims, wherein the backlight control module controls the on/off status of the LEDs (320) of the second group at a frequency that is lower than the change of the on/off status of the LEDs (310) of the first group.

7. The display system according to any one of the preceding claims, wherein at least one diffuser is provided between the LEDs and the LCD display screen.

8. The display system according to any one of the preceding claims, wherein the LCD display screen (200) is a monochrome display screen, wherein the colour shown in the first or second area of the LCD display screen is determined by a colour of the light of the LED (300) that provides the backlight for the first and second area respectively.

9. The display system according to claim 5 and 8, wherein at least two LEDs are provided for each said at least one text field.

10. The display system according to claim 9, wherein the at least two LEDs emit light of different colours.

11. The display system according to any one of the preceding claims, wherein the guidance structure (400) contains at least two separate parts (410, 420) which are arranged superimposed between the LEDs (300) and the LCD display screen (200), wherein the two parts (410, 420) are separated by a compressible layer (350) provided between the at least two separate parts.

12. The display system according to any one of the preceding claims, further comprising a printed circuit board (100) on which the LEDs (300) of the first and of the second group are mounted, wherein the guidance structure (400) is mounted on the printed circuit board (100) above the LEDs (300) of the first and second group.

13. The display system according to any of claims 2 to 12, wherein a screen control module (600) configured to control pixels of the LCD display screen sets the pixels in the several sub-regions (211-214) to a transparent state.

14. The display system according to any one of the preceding claims, wherein the LCD display screen (200) is an STN display screen.

15. An audio mixing console comprising a display system as mentioned in any of claims 1 to 14, wherein the input signal is an audio signal.
